# EUROPÄISCHE PATENTSCHRIFT

(11) **EP 4 256 251 B1**
(45) Veröffentlichungstag und Bekanntmachung des Hinweises auf die Patenterteilung: **22.10.2025**
(21) Anmeldenummer: 21824517.3
(22) Anmeldetag: 30.11.2021
(51) Int. Cl.: F24T 10/13, F24T 10/00

(54) **UNTERTÄGIGES EISSPEICHERSYSTEM IN GRUNDWASSERLEITERN UND GRUNDWASSERGERINGLEITERN ZUR WÄRMEVERSORGUNG**
UNDERGROUND ICE STORAGE SYSTEM IN AQUIFERS AND AQUITARDS FOR SUPPLYING HEAT
SYSTÈME SOUTERRAIN DE STOCKAGE DE GLACE DANS DES AQUIFÈRES ET DES AQUITARDS POUR FOURNIR DE LA CHALEUR

(30) Priorität: 03.12.2020 DE 102020132176
(43) Veröffentlichungstag der Anmeldung: 11.10.2023
(73) Patentinhaber: Christian-Albrechts-Universität zu Kiel, 24118 Kiel (DE)
(72) Erfinder: DAHMKE, Andreas, 24306 Plön (DE); SCHWARZFELD, Bernd, 22339 Hamburg (DE)
(74) Vertreter: Hauck Patent- und Rechtsanwälte PartmbB
(86) Internationale Anmeldenummer: PCT/EP2021/083613
(87) Internationale Veröffentlichungsnummer: WO 2022/117579

(56) Entgegenhaltungen:
- EP-A1- 3 415 838
- WO-A1-2020/117946
- WO-A2-2015/159188
- CN-A- 109 798 091
- CN-U- 211 503 320
- DE-A1- 102005 060 970
- DE-A1- 102010 032 851
- DE-A1- 19 724 627
- US-A1- 2017 292 792

## Beschreibung

Die Erfindung betrifft eine Erdwärmesonde zum Einbringen in einen geologischen Untergrund, und ein Eisspeichersystem zur Wärmeversorgung, umfassend mehrere in einen geologischen Untergrund eingebrachte Erdwärmesonden zur Ausbildung eines Eisspeichers in einer wasserführenden Schicht, insbesondere in einem Grundwasserleiter oder einem Grundwassergeringleiter. Zudem betrifft die Erfindung eine solche Erdwärmesonde zur Verwendung für das Eisspeichersystem sowie ein Verfahren zur Einbringung von Wärme in den geologischen Untergrund bzw. zur Entnahme von Wärme aus dem geologischen Untergrund.

Bekannte Eisspeichersysteme umfassen meist ein im Untergrund vergrabenes Becken, auch Zisterne genannt, welches mit Wasser gefüllt wird. Über Wärmetauscher wird dem im Becken befindlichen Wasser Wärmeenergie entnommen bzw. zugeführt, wobei insbesondere im Phasenübergang zwischen fester und flüssiger Phase thermische Energie in Form von latenter Wärme gespeichert wird. Derartige Eisspeichersysteme zur Wärmeversorgung können zu Kühlzwecken, aber auch zu Heizzwecken verwendet werden. So kann beispielsweise im Sommer der Eisspeicher Wärme eines kühlenden Gebäudes aufnehmen. Im Winter hingegen kann zum Heizen des Gebäudes dem Eisspeicher Wärme entnommen werden bis zur Vereisung des Untergrunds. So kann beim Abkühlen des Wassers sogenannte sensible Wärmeenergie und beim Gefrieren freiwerdende Kristallisationswärme (latente Wärme) auch zur kalten Jahreszeit zum Heizen verwendet werden. Derartige Eisspeicherbecken sind bautechnisch aufwendig und verlangen hohe Investitionskosten. Zudem sind sie in der Größe nicht beliebig mit angemessenen finanziellen Mitteln skalierbar. Weiterhin sind derartige Becken in ihrem Einsatzbereich stark beschränkt, können insbesondere in dicht bebauten, städtischen Gebieten keine Verwendung finden.

Bekannt ist auch die Speicherung bzw. die Entnahme von Wärmeenergie im bzw. aus dem geologischen Untergrund mittels in Bohrlöchern angeordneten Erdwärmesonden ("Borehole Thermal Energy Storage", BTES). Auch sind Grundwasserspeicher bekannt, bei denen Grundwasser aus einem Grundwasserleiter an die Erdoberfläche gepumpt und dem mittels eines Wärmetauschers Energie genommen wird ("Aquifer Thermal Energy Storage", ATES).

Ein BTES-System ist aus DE 10 2010 032 851 A1 bekannt, mit welchem Wasser im Erdreich vereist wird. So wird das dort vorgeschlagene Erdwärmesondenfeld im saisonalen Wechsel betrieben, es wird also im Winterhalbjahr dem Untergrund Wärme entzogen und das Erdreich unter Ausbildung eines Eisspeichers abgekühlt und im Sommerhalbjahr das Erdreich thermisch regeneriert. Die dort verwendeten Erdwärmesonden werden im oberen Erdreich, welches von der Sonneneinstrahlung sowie der Lufttemperatur thermisch beeinflusst ist, mit einer passiven Isolierung versehen, die den Aufbau des Eismantels beschleunigen und die Bodenhebungen durch einen Frost-Tau-Wechsel verringern soll.

Ausgehend von diesem Stand der Technik liegt der Erfindung die Aufgabe zugrunde, ein Eisspeichersystem, eine Erdwärmesonde sowie ein Verfahren zur Verfügung zu stellen, die die Ausbildung eines Eisspeichers auch im städtischen Gebiet ermöglichen. Insbesondere sollen hohe Wärmespeicherkapazitäten und hinreichende Leistung erreicht sowie thermische, hydraulische und geomechanische Einflüsse der oberflächennahen Bodenschichten vermieden werden. Zudem soll auch ein negativer Einfluss auf bestehende Grundwasserbewirtschaftung vermieden werden.

Die Erfindung löst die Aufgabe durch eine Erdwärmesonde gemäß Anspruch 1 und durch ein Eisspeichersystem gemäß Anspruch 2, sowie durch ein Verfahren gemäß Anspruch 14. Vorteilhafte Ausgestaltungen sind Gegenstand der abhängigen Ansprüche, der Beschreibung sowie der Figuren.

Das erfindungsgemäße Eisspeichersystem zur Wärmeversorgung umfasst mehrere in einen geologischen Untergrund eingebrachte Erdwärmesonden zur Ausbildung eines Eisspeichers in einer wasserführenden Schicht, wobei die Erdwärmesonden jeweils einen oberflächennahen ersten Abschnitt und einen unterhalb an den ersten Abschnitt anschließenden, in eine wasserführende Schicht ragenden zweiten Abschnitt zur Ausbildung des Eisspeichers in der wasserführende Schicht aufweisen, wobei der erste Abschnitt eine aktive Wärmedämmung aufweist zur Dämmung gegenüber dem den ersten Abschnitt umgebenden geologischen Untergrund.

Die erfindungsgemäße Erdwärmesonde zum Einbringen in einen geologischen Untergrund umfasst einen in einem Verwendungszustand der Erdwärmesonde oberflächennahen ersten Abschnitt und einen unterhalb an den ersten Abschnitt anschließenden,
in dem Verwendungszustand der Erdwärmesonde in eine wasserführende Schicht ragenden zweiten Abschnitt zur Ausbildung eines Eisspeichers in der wasserführenden Schicht, wobei der erste Abschnitt eine aktive Wärmedämmung aufweist zur Dämmung gegenüber dem den ersten Abschnitt umgebenden geologischen Untergrund.

Das erfindungsgemäße Verfahren zur Einbringung und Entnahme von Wärmeenergie in einen geologischen Untergrund unter Ausbildung eines Eisspeichers sieht vor, dass ein Wärmeträgerfluid in mehreren in den geologischen Untergrund eingebrachte Erdwärmesonden zirkuliert, wobei die Erdwärmesonden jeweils einen oberflächennahen ersten Abschnitt und einen unterhalb an den ersten Abschnitt anschließenden, in eine wasserführende Schicht ragenden zweiten Abschnitt aufweisen, wobei der erste Abschnitt eine aktive Wärmedämmung aufweist zur Dämmung gegenüber dem den ersten Abschnitt umgebenden geologischen Untergrund, sodass ein Wärmeaustausch zwischen dem Wärmeträgerfluid und dem umgebenden geologischen Untergrund im Wesentlichen nur über den zweiten Abschnitt mit der wasserführende Schicht erfolgt.

Die nachfolgenden Erläuterungen und Ausgestaltungen betreffen sowohl das erfindungsgemäße Eisspeichersystem als auch die erfindungsgemäße Erdwärmesonde und das erfindungsgemäße Verfahren. Erläuterungen zu dem Eisspeichersystem gelten entsprechend für die Erdwärmesonde und das Verfahren und andersherum. Das erfindungsgemäße Verfahren kann mit dem erfindungsgemäßen Eisspeichersystem bzw. der erfindungsgemäßen Erdwärmesonde ausgeführt werden. Das erfindungsgemäße Eisspeichersystem bzw. die erfindungsgemäße Erdwärmesonde sind folglich ausgebildet, dass erfindungsgemäße Verfahren auszuführen.

Das erfindungsgemäße Eisspeichersystem umfasst Erdwärmesonden, die zumindest zwei unterschiedliche Abschnitte aufweisen, nämlich einen gegenüber dem umgebenden geologischen Untergrund wärmegedämmten ersten Abschnitt und einen in eine wasserführende Schicht ragenden zweiten Abschnitt. Der zweite Abschnitt dient der Ausbildung des Eisspeichers in der wasserführenden Schicht. Der zweite Abschnitt weist hierfür entsprechend keine derartig aktive Wärmedämmung auf wie der erste Abschnitt. Insbesondere weist der zweite Abschnitt keinerlei Wärmedämmung auf. Durch die Erdwärmesonden des Eisspeichersystems zirkulierendes Wärmeträgerfluid kann mit der den zweiten Abschnitt umgebenden wasserführenden Schicht Wärmeenergie austauschen und somit einen Eisspeicher in dieser Schicht ausbilden. Aufgrund der Wärmedämmung des ersten Abschnitts der Erdwärmesonden findet ein solcher Wärmeaustausch zwischen dem Wärmeträgerfluid und dem den ersten Abschnitt umgebenden geologischen Untergrund im Wesentlichen nicht statt. Somit kann dieser Bereich eisfrei gehalten werden.

Erfindungsgemäß handelt es sich bei der Wärmedämmung um eine aktive Wärmedämmung. Die aktive Wärmedämmung ist im Gegensatz zu einer passiven Wärmedämmung zu verstehen. Mit der aktiven Wärmedämmung kann insbesondere eine gewünschte Temperatur aktiv aufrechterhalten werden. Auch kann diese Temperatur einstellbar sein, sodass eine dynamische Wärmedämmung möglich ist.

So kann beispielsweise nach einer Ausgestaltung die Erdwärmesonde ein Wärmeträgerrohr, eine das Wärmeträgerrohr umgebende Wandung und einen zwischen der Wandung und der Erdwärmesonde befindlichen Isolierraum umfassen. Über den Isolierraum kann die aktive Wärmedämmung realisiert werden. Die Wandung kann insbesondere eine Rohrwandung sein. Nach einer Ausgestaltung kann die aktive Wärmedämmung erreicht werden durch ein in den Isolierraum aufgenommenes, temperierbares Isoliergas. Das Isoliergas kann temperierbar sein, es kann also eine Temperatur des Isoliergases einstellbar sein, durch in dem Isolierraum angeordnete Heiz- oder Kühlvorrichtungen. Insbesondere kann nach einer Ausgestaltung die Temperierbarkeit erreicht werden durch Austauschmittel zum Austausch des in dem Isolierraum befindlichen Isoliergases. So kann als Austauschmittel beispielsweise eine Gaspumpe vorgesehen sein, die das in dem Isolierraum befindliche Isoliergas regelmäßig austauscht. Im Rahmen dieses Austauschs kann Isoliergas mit einer voreingestellten Temperatur in den Isolierraum eingeleitet werden, sodass der Isolierraum die gewünschte Temperatur annimmt. Durch eine solche aktive Wärmedämmung kann, insbesondere gegenüber einer lediglich passiven Wärmedämmung, eine wesentlich zuverlässigere Dämmung erreicht werden. Somit kann zuverlässig ein Gefrieren des geologischen Untergrunds um den ersten Abschnitt herum verhindert werden.

Mit dem erfindungsgemäßen Eisspeichersystem kann in der wasserführenden Schicht unter Ausbildung eines Eisspeichers Wärmeenergie gespeichert sowie Wärmeenergie der wasserführenden Schicht entnommen werden. Bei der wasserführenden Schicht kann es sich insbesondere um einen Grundwasserleiter oder um einen Grundwassergeringleiter handeln. Das Eisspeichersystem bildet somit einen Latentwärmespeicher und unterhalb des Temperaturbereichs des Eis-Wasser-Phasenwechsels, also des Aggregatzustandswechsels, einen sensiblen Wärmespeicher für Kühl- wie auch für Heizzwecke. Zum Einbringen von Wärmeenergie in die wasserführende Schicht bzw. zur Entnahme von Wärmeenergie aus der Schicht kann ein Wärmeträgerfluid ausgehend von der Erdoberfläche durch die Erdwärmesonden mittels einer Fluidpumpe zirkuliert werden. Die Erdwärmesonden können hierfür U-Rohre umfassen, durch welche das Wärmeträgerfluid gepumpt wird. Mittels eines Wärmetauschers an der Erdoberfläche kann dem Wärmeträgerfluid Wärmeenergie zugeführt bzw. entnommen werden. Die Erdwärmesonden können sich insbesondere vertikal in den geologischen Untergrund hinein erstrecken, können jedoch grundsätzlich auch schräg verlaufen oder kurvenartig. Die wasserführende Schicht kann insbesondere ein natürliches poröses Medium umfassen, beispielsweise ein Sedimentgestein, und kann Wasser gesättigt sein. Bei einem Grundwasserleiter als wasserführende Schicht kann über das erfindungsgemäße Eisspeichersystem somit ein Aquifer-Eisspeicher und bei einem Grundwassergeringleiter als wasserführender Schicht ein Aquitarden-Eisspeicher ausgebildet werden. Mit dem Eisspeichersystem oder einem Verbund mehrerer solcher Systeme kann beispielsweise ein Stadtteil, ein Einzelgebäude oder auch nur ein Teil eines Gebäudes gekühlt bzw. geheizt werden. So kann Wärmeenergie aus dem Gebäudebestand bzw. anderer obertägiger Infrastruktureinheiten Eisspeicher abgegeben werden bzw. Wärmeenergie aus diesem entnommen werden.

Die Erdwärmesonde kann mitsamt dem Isolierraum gefertigt sein und anschließend in den geologischen Untergrund, beispielsweise in ein Bohrloch ausreichenden Durchmessers, eingebracht werden. Auch kann beispielsweise zunächst die Wandung in den geologischen Untergrund, beispielsweise in ein Bohrloch entsprechenden Durchmessers, eingebracht und anschließend die Erdwärmesonde innerhalb der Wandung in den Isolierraum eingebracht werden. Anschließend kann der Isolierraum mit einem Medium aufgefüllt werden, beispielsweise mit Schüttgut. Die Wandung erstreckt sich insbesondere entlang des gesamten ersten Abschnitts. Die Isolierung kann beispielsweise einen Durchmesser von 10 cm bis 50 cm aufweisen, insbesondere von 20 cm bis 30 cm. Der kürzeste Abstand zwischen der Erdwärmesonde und der Wandung kann insbesondere 1 cm bis 2 cm betragen. Umfasst die Erdwärmesonde ein U-Rohr, so kann der kürzeste Abstand zwischen Wandung und jedem der beiden Rohrelemente des U-Rohrs jeweils mindestens 1 cm bis 2 cm betragen. Somit kann eine ausreichende Isolierung gewährleistet werden.

Insbesondere in einem oberflächennahen Bereich ist eine erfindungsgemäße aktive Wärmedämmung von Interesse, da ein Vereisen des oberflächennahen Untergrundbereichs der Verwendung des Eisspeichersystems in einem städtischen Gebiet entgegenstehen würde. So finden sich im städtischen Gebiet im oberflächennahen Bereich unterschiedliche Begebenheiten, wie Versorgungsleitungen, beispielsweise Stromkabel, Gas- oder Wärmenetzleitungen sowie die Kanalisation. Auch befindet sich hier die Wurzelzone von Pflanzen, die in der Stadt eine wichtige ökologische Funktion, zum Beispiel als natürlicher Filter für Feinstaub wahrnehmen. Zudem besitzt der oberflächennahe Bodenraum auch für die Grundwasserneubildung und für den Grundwasserschutz eine beträchtliche Bedeutung und ist rechtlich ein Schutzgut, das durch technische Maßnahmen in seinen ökologischen Leistungen nicht oder nur geringfügig verändert werden darf, um gesetzlichen Vorgaben zu entsprechen. Oberflächennah bedeutet hierbei, dass sich der die aktive Wärmedämmung aufweisende erste Abschnitt so weit in den geologischen Untergrund hinein erstreckt, dass die genannten Begebenheiten nicht durch den im Untergrund auszubildenden Eisspeicher beeinträchtigt werden. Insbesondere erstreckt sich der oberflächennahe erste Abschnitt ausgehend von einer Geländeoberkante in die Tiefe. Nach einer Ausgestaltung kann sich der erste Abschnitt mindestens bis zu einer Tiefe von 5 m in den Untergrund erstrecken. Bis zu dieser Tiefe erstrecken sich üblicherweise die genannten Begebenheiten.

Dank der relativ weit in den Untergrund reichenden thermisch aktiven Wärmedämmung können das erfindungsgemäße Eisspeichersystem, die erfindungsgemäße Erdwärmesonde sowie das erfindungsgemäße Verfahren auch im städtischen Gebiet verwendet werden. In vorteilhafterweise kann so auch im städtischen Gebiet der geologische Untergrund mit seinem großen Volumen und seiner großen volumetrischen Wärmekapazität als Eisspeicher verwendet werden. Der Stand der Technik erlaubt die Ausbildung eines solchen Eisspeichers im städtischen Untergrund nicht. So ist mit dem in DE 10 2010 032 851 A1 beschriebenen Erdwärmesondenfeld eine Vereisung des Untergrunds bereits in relativ geringen Tiefen vorgesehen. Zudem kann aufgrund der lediglich passiven Wärmedämmung der oberflächennahe Bereich bei dem dort beschriebenen Erdwärmesondenfeld nicht zuverlässig eisfrei gehalten werden.

Nach einer Ausgestaltung ist in dem Isolierraum ein Füllstoff aufgenommen. Insbesondere kann zusätzlich zu dem Isoliergas ein Feststoff als Füllstoff aufgenommen sein. Der Füllstoff kann eine granuläre mineralische Isolierschüttung sein, beispielsweise Blähtongranulat. Auch können Kiese als Füllstoff verwendet werden. Mit dem Füllstoff kann die Konstruktion aus Erdwärmesonde und umgebenden Isolierraum stabilisiert werden, insbesondere gegenüber geomechanischen Einflüssen. Der Füllstoff ist dabei bevorzugt nur gering wärmeleitend, um nicht die aktive Wärmedämmung zu beeinträchtigen.

Nach einer Ausgestaltung umfasst das Eisspeichersystem eine Wasserpumpe zum Abpumpen von in den Isolierraum eintretenden Wasser. Die Wasserpumpe kann an der Geländeoberfläche angeordnet sein, kann jedoch auch innerhalb des Isolierraums aufgenommen sein. Aus dem geologischen Untergrund oder auch über die Erdoberfläche, beispielsweise aufgrund von Niederschlag, oder als Kondensat in den Isolierraum eintretendes Wasser kann mittels der Wasserpumpe entfernt werden. Dieses Wasser könnten ansonsten die thermischen Dämmeigenschaften des Isolierraums durch Erhöhen der thermischen Leitfähigkeit und/oder Verringern der Permeabilität des Schüttguts gegenüber der Gasphase negativ beeinflussen. Auch könnte es zu einem Vereisen des Wassers und damit zu einer Beschädigung der Erdwärmesonde kommen.

Nach einer Ausgestaltung umfasst zumindest eine der Erdwärmesonden ein oder mehrere weitere, unterhalb des zweiten Abschnitts angeordnete Abschnitte mit aktiver Wärmedämmung und Abschnitte zur Ausbildung eines Eisspeichers in einer wasserführenden Schicht. Insbesondere können mehrere oder alle der Erdwärmesonden des Eisspeichersystems derartige weitere Abschnitte aufweisen. Das Vorsehen weiterer Abschnitte mit aktiver Wärmedämmung und weiterer Abschnitte zur Ausbildung eines Eisspeichers ermöglicht die Ausbildung eines Eisspeichers auch in tiefer liegenden wasserführenden Schichten. Die weiteren Abschnitte mit aktiver Wärmedämmung erstrecken sich dabei jeweils entlang Untergrundschichten, insbesondere Sedimentschichten, die von einer Vereisung freigehalten werden sollen. Somit können durch das Eisspeichersystem mehrere voneinander beabstandete, räumlich getrennte Vereisungszonen im Untergrund erzeugt werden. Aufgrund der aktiven Wärmedämmung findet ein Wärmeaustausch zwischen den Erdwärmesonden und dem umgebenden Untergrund dabei jeweils nur in den wasserführenden Schichten statt und nicht in den dazwischenliegenden, nicht für die Verwendung als Eisspeicher vorgesehenen Schichten. Dies führt zu geringeren Wärmeverlusten. Insbesondere können somit mehrere voneinander räumliche getrennte, untereinander liegende Schichten als Eisspeicher verwendet, was die thermische Kapazität des gesamten untertägigen Eisspeichersystems erhöht.

Nach einer Ausgestaltung ist zwischen dem ersten Abschnitt und dem zweiten Abschnitt eine thermisch stabile hydraulische Abdichtung gegenüber aufsteigendem Grundwasser angeordnet. Eine solche hydraulische Abdichtung kann insbesondere auch zwischen eventuell vorgesehenen weiteren Abschnitten mit aktiver Wärmedämmung und Abschnitten zur Ausbildung eines Eisspeichers in einer wasserführenden Schicht angeordnet sein. Die hydraulische Abdichtung kann insbesondere in Form eines Packersystems sein oder als Tonsperre ausgebildet. Durch eine solche hydraulische Abdichtung kann Aufstieg von hydraulisch gespanntem Grundwasser in den Isolierraum und damit eine Beeinträchtigung der aktiven Wärmedämmung verhindert werden.

Wie bereits angesprochen, kann Wärmeträgerfluid durch die Erdwärmesonden gefördert werden. Nach einer Ausgestaltung kann entsprechend eine Fördereinheit zum Fördern eines Wärmeträgerfluids durch die Erdwärmesonden zum Einbringen von Wärmeenergie in die wasserführende Schicht und/oder zur Entnahme von Wärmeenergie aus der wasserführenden Schicht vorgesehen sein. Eine solche Fördereinheit kann beispielsweise eine Pumpe sein, die insbesondere an der Geländeoberfläche angeordnet sein kann. Als Wärmeträgerfluid kann eine Wärmeträgerflüssigkeit vorgesehen sein, beispielsweise Salzsole, flüssiger Stickstoff oder organische Flüssigkeiten. Das Wärmeträgerfluid weist insbesondere einen Gefrierpunkt kleiner oder gleich -10 °C auf. Dies ist für die Ausbildung eines untertägigen Eisspeichers üblicherweise ausreichend.

Es kann nach einer Ausgestaltung des Verfahrens zunächst Wärmeträgerfluid einer ersten Temperatur in einem Anstrombereich des Grundwassers angeordnete Erdwärmesonden eingebracht werden und anschließend Wärmeträgerfluid einer höheren, zweiten Temperatur in außerhalb des Anstrombereichs angeordnete Erdwärmesonden eingebracht werden. Die zweite Temperatur ist also folglich höher als die erste Temperatur. Somit wird erreicht, dass die Ausbildung des Eisspeichers in dem Anstrombereich, also in der Nähe der bezogen auf die Strömungsrichtung des Grundwassers am weitesten stromaufwärts liegenden Erdwärmesonden, beginnt. Hier ist die Verwendung eines Wärmeträgerfluids einer niedrigeren Temperatur sinnvoll, da aufgrund der Strömung des Grundwassers eine Vereisung hier besonders schwer zu erreichen ist. Als Wärmeträgerfluid kann beispielsweise in diesem Fall flüssiger Stickstoff für die initiale Vereisungsphase verwendet werden. Nach Ausbildung eines Eiskörpers im Anstrombereich ist es für die Ausbildung eines Eiskörpers im dahinterliegenden, stromabwärts liegenden Erdbereich ausreichend Wärmeträgerfluid einer höheren Temperatur zu verwenden.

Nach einer Ausgestaltung ist die wasserführende Schicht ein Grundwasserleiter oder ein Grundwassergeringleiter. Wie bereits angesprochen, kann das erfindungsgemäße Eisspeichersystem einen Eisspeicher sowohl in einem Grundwasserleiter als auch in einem Grundwassergeringleiter ausbilden. Da ein Grundwassergeringleiter im Vergleich zu einem Grundwasserleiter eine geringere hydraulische Permeabilität aufweist, kann es bei den Gefrier- bzw. Auftauprozessen zu größeren Druckbelastungen bzw. -entlastungen kommen. Entsprechend können die Erdwärmesonden, insbesondere die zur Führung des Wärmeträgerfluids genutzten Leitungen, besonders dickwandig ausgebildet sein, um eventuellen Verformungen standzuhalten. Auch kann eine Überwachung der Temperatur und des Drucks im Umfeld des Eiskörpers notwendig sein, um die Erdwärmesonden möglicherweise beschädigenden geomechanischen Einflüssen rechtzeitig entgegentreten zu können. Das erfindungsgemäße Eisspeichersystem kann folglich Temperatursensoren und/oder Drucksensoren aufweisen, insbesondere angeordnet innerhalb der jeweiligen wasseraufweisenden Schicht, beispielsweise in oder an dem entsprechenden Abschnitt der Erdwärmesonde.

Eine Ausgestaltung der Erfindung wird im Folgenden anhand von Figuren erläutert. Es zeigen:
- Figur 1: ein erfindungsgemäßes Eisspeichersystem mit mehreren Erdwärmesonden in einer Draufsicht auf eine Erdoberfläche,
- Figur 2: einen Schnitt durch das Eisspeichersystem entlang der in Figur 1 mit C-C gekennzeichneten Linie,
- Figur 3: eine Detailansicht einer der Erdwärmesonden,
- Figur 4: eine alternative Ausgestaltung einer erfindungsgemäßen Erdwärmesonde,
- Figur 5: eine alternative Ausgestaltung eines erfindungsgemäßen Eisspeichersystems.

Soweit nichts anderes angegeben ist, bezeichnen im Folgenden gleiche Bezugszeichen gleiche Gegenstände.

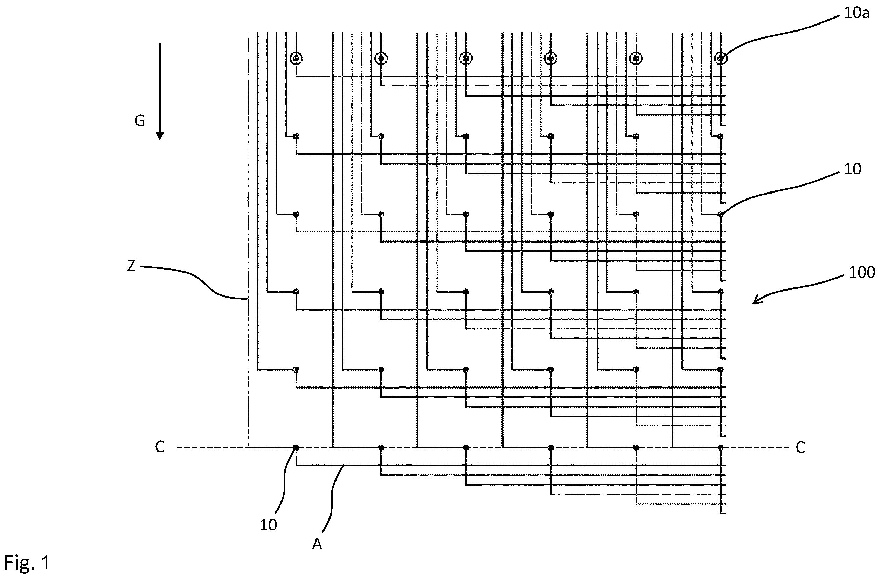

Das in Figur 1 ersichtliche Eisspeichersystem umfasst mehrere Erdwärmesonden 10, von denen aus Gründen der Übersichtlichkeit nur einige mit Bezugszeichen versehen sind. Im vorliegenden Beispiel sind die Erdwärmesonden 10 in einem gleichmäßigen Raster aus 6 × 6 Sonden angeordnet. Grundsätzlich sind natürlich auch andere Anordnungen denkbar. Die Erdwärmesonden 10 sind eingebracht in im geologischen Untergrund 100 befindlichen Bohrlöchern. In dem vorliegenden Ausführungsbeispiel verfügt jede Erdwärmesonde 10 über eine eigene Zuleitung Z sowie eine eigene Ableitung A. Mittels einer nicht dargestellten Fördereinheit kann ein Wärmeträgerfluid über die Zuleitungen Z den Erdwärmesonden 10 zugeführt und über die Ableitungen A den Erdwärmesonden wieder entnommen werden. Somit kann in grundsätzlich bekannter Weise Wärmeenergie in den geologischen Untergrund eingebracht beziehungsweise aus dem geologischen Untergrund entnommen werden zum Zwecke der Wärmeversorgung beispielsweise eines Gebäudes. Die Erdwärmesonden 10 erstrecken sich in eine Grundwasserschicht als wasserführende Schicht oder in einem Grundwassergeringleiter, in welcher bei ausreichender Abkühlung durch die Erdwärmesonden 10 ein Eisspeicher ausgebildet werden kann. Das erfindungsgemäße Eisspeichersystem kann somit als Latentwärmespeicher dienen.

Dabei kann zunächst Wärmeträgerfluid einer ersten Temperatur in die in Bezug auf eine Grundwasserströmung G erste Reihe Erdwärmesonden 10a eingebracht werden. Die Erdwärmesonden 10a bilden damit in einem Anstrombereich angeordnete Anstromerdwärmesonden. Anschließend kann Wärmeträgerfluid einer höheren, zweiten Temperatur in in Bezug auf die Grundwasserströmung G hinter der ersten Reihe Erdwärmesonden 10a angeordnete Erdwärmesonden 10 eingebracht werden. Somit wird erreicht, dass die Ausbildung des Eisspeichers in dem Anstrombereich, also in der Nähe der bezogen auf die Grundwasserströmung G am weitesten stromaufwärts liegenden Erdwärmesonden beginnt. Hier ist die Verwendung eines Wärmeträgerfluids einer niedrigeren Temperatur sinnvoll, da aufgrund der Strömung des Grundwassers eine Vereisung hier besonders schwer zu erreichen ist. Als Wärmeträgerfluid kann beispielsweise in diesem Fall flüssiger Stickstoff für die initiale Vereisungsphase verwendet werden. Nach Ausbildung eines Eiskörpers im Anstrombereich ist es für die Ausbildung eines Eiskörpers im dahinterliegenden, stromabwärts liegenden Erdbereich ausreichend, Wärmeträgerfluid einer höheren Temperatur zu verwenden, da durch den in Strömungsrichtung davor liegenden Eiskörper ein Strömungsschatten erzeugt wird.

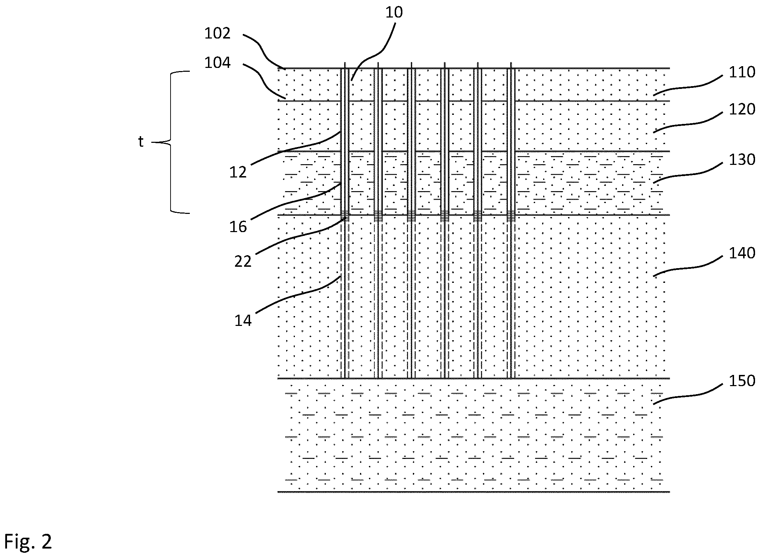

Figur 2 zeigt einen Schnitt durch das Eisspeichersystem entlang der in Figur 1 mit C-C gekennzeichneten Linie. Wie in Figur 2 ersichtlich, erstrecken sich die Erdwärmesonden 10 von einer Geländeoberkante 102 bis hinunter in einen Grundwasserleiter 140. Die Erdwärmesonden 10 durchtreten dabei einen zwischen Geländeoberkante 102 und einem darunterliegenden Grundwasserspiegel 104 liegenden oberflächennahen, ersten Untergrundbereich 110, einen darauffolgenden ersten Grundwasserleiter 120 sowie einen darauffolgenden Grundwassergeringleiter 130. In Figur 2 ist zudem unterhalb des Grundwasserleiters 140 ein weiterer Grundwassergeringleiter 150 angeordnet. Die Erdwärmesonden 10 umfassen jeweils einen ersten Abschnitt 12 sowie einen sich an den ersten Abschnitt 12 anschließenden, tiefer in dem geologischen Untergrund angeordneten zweiten Abschnitt 14. In dem vorliegenden Beispiel erstreckt sich der erste Abschnitt von der Geländeoberkante 102 durch die Schichten 110, 120 und 130, während sich der zweite Abschnitt 14 durch die Schicht 140 erstreckt. Die Abschnitte 12, 14 sind durch ein Packersystem 22 gegenüber aus dem Grundwasserleiter 140 aufsteigendem Grundwasser hydraulisch abgedichtet. Der erste Abschnitt 12 erstreckt sich bevorzugt mindestens über eine Tiefe von t = 5 m in den geologischen Untergrund. Erfindungsgemäß weist der erste Abschnitt 12 weist eine aktive Wärmedämmung 16 auf zur thermischen Isolierung gegenüber den umgebenden Untergrundbereich 110, 120, 130. Der zweite Abschnitt 14 weist keine solche Isolierung auf. Der zweite Abschnitt 14 kann jedoch gegenüber dem umgebenden Untergrund verfiltert sein, insbesondere über einen Stahlfilter, wie durch die gestrichelt dargestellte Wandung gekennzeichnet.

Mit dem Eisspeichersystem kann Wärmeenergie in den Grundwasserleiter 140 über die zweiten Abschnitte 14 der Erdwärmesonden 10 eingebracht und aus diesem Grundwasserleiter 140 entnommen werden. Wird ausreichend Wärmeenergie aus dem Grundwasserleiter 140 entnommen, kommt es zur Vereisung des Grundwasserleiters 140 und somit zur Realisierung eines Latentwärmespeichers. Während insbesondere mit der dabei freiwerdenden Kristallisationswärmeenergie ein mit Wärme zu versorgendes Gebäude geheizt werden kann, kann beim entgegen gesetzt verlaufenden Auftauprozess durch die Aggregatzustandsveränderung eine hohe Wärmeenergiemenge vom Eisspeichersystem aufgenommen und für Kühlzwecke z.B. bei industriellen Fertigungsprozessen oder für Gebäude genutzt werden.

Die Wärmeträgerflüssigkeit durchläuft auf dem Weg zu dem zweiten Abschnitt 14 bzw. von dem zweiten Abschnitt 14 den ersten Abschnitt 12. Damit es nicht zu einer Vereisung des den ersten Abschnitt 12 umgebenden Untergrunds kommt, ist die aktive Wärmedämmung des ersten Abschnitts 12 vorgesehen. So kann die im Folgenden im Detail erläuterte aktive Wärmedämmung die oberen Schichten 110, 120 und 130 von schädlichen Temperaturveränderungen in der Bohrungsumgebung wie z.B. Eisbildung freihalten und somit eine Beschädigung dort verlaufender Leitungen, wie beispielsweise Stromkabeln, Wasser- oder Gasleitungen (nicht dargestellt), oder von im Boden existierender Fauna und Flora (nicht dargestellt, beispielsweise bodenbewohnende Tiere und Mikroorganismen oder Wurzeln bzw. Rhizome) verhindern. Daher eignet sich das Eisspeichersystem insbesondere auch zur Verwendung in einem städtischen Gebiet, in dem besondere Randbedingungen für die Nutzung des untertägigen Raumes bestehen.

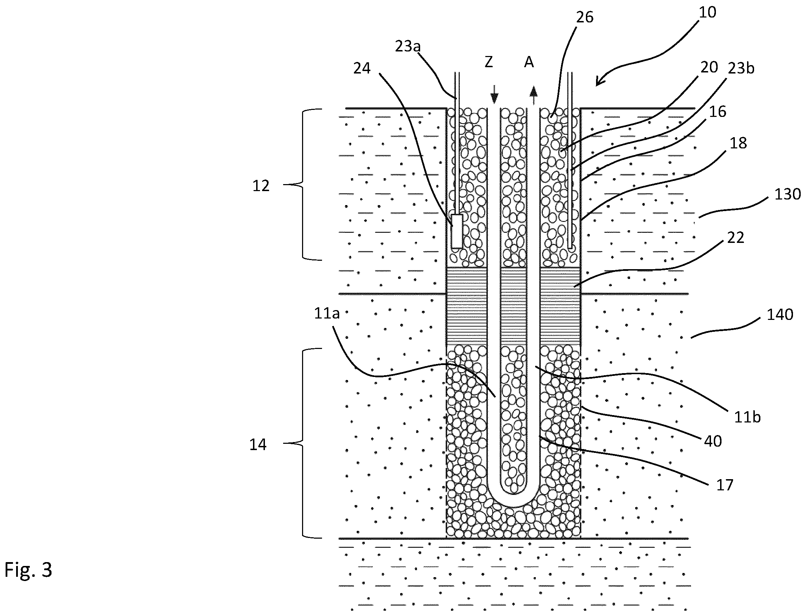

In Figur 3 ist im Schnitt eine Erdwärmesonde 10 in Detailansicht dargestellt. Die Erdwärmesonde 10 weist ein als U-Rohr ausgebildetes Wärmeträgerrohr 17 zur Führung des Wärmeträgerfluids auf, umfassend einen Zulaufrohrabschnitt 11a und einen Ablaufrohrabschnitt 11b. Wärmeträgerflüssigkeit, wie beispielsweise Sole, kann dem Zulaufrohrabschnitt 11a über den mit Z gekennzeichneten Zulauf zugeführt werden, das Wärmeträgerrohr 17 durchlaufen und den Ablaufrohrabschnitt 11b über einen mit A gekennzeichneten Ablauf wieder verlassen. Der erste Abschnitt 12 der Erdwärmesonde 10 ist dabei in Figur 3 nur abschnittsweise dargestellt. In der lediglich schematischen Figur 3 ist der Übergang zwischen dem Grundwassergeringleiter 130 und dem Grundwasserleiter 140, in welchen der Eiskörper ausgebildet wird, zu sehen. Während der zweite Abschnitt 14 der Erdwärmesonde 10 gegenüber dem umgebenden Untergrund, also gegenüber dem Grundwasserleiter 140, nicht isoliert ist, weist der erste Abschnitt 12 eine aktive Wärmedämmung 16 gegenüber dem umgebenden Untergrund, also gegenüber dem Geringwasserleiter 130, auf. Der zweite Abschnitt 14 weist lediglich einen Stahlfilter 40 auf zur Abgrenzung gegenüber dem umgebenden Grundwasserleiter 140.

Die aktive Wärmedämmung 16 umfasst eine das Wärmeträgerrohr 17 umgebende Wandung 18 und einen zwischen der Wandung 18 und der Erdwärmesonde 10 befindlichen Isolierraum 20. Die Wandung 18 bildet somit eine Verrohrung um das Wärmeträgerrohr 17 der Erdwärmesonde 10. Der Isolierraum 20 ist mit einem Isoliergas, insbesondere mit Luft, sowie mit Blähtongranulat 26 als Füllstoff gefüllt. Das Blähtongranulat ist durch kleine Kreise dargestellt. Unterhalb der aktiven Wärmedämmung 16 ist innerhalb der Rohrwandung 18 ein Packersystem 22 zur hydraulischen Abdichtung gegenüber aus dem Grundwasserleiter 140 aufsteigendem Grundwasser angeordnet. Während das Blähtongranulat für eine geomechanische Stabilisierung sorgt, gewährleistet das Isoliergas eine ausreichende Wärmedämmung der Erdwärmesonde 10 gegenüber dem Geringwasserleiter 130.

Die Wärmedämmung 16 ist in dem Sinne "aktiv", dass die Temperatur des den Isolierraum ausfüllenden Isoliergases aktiv im Wesentlichen konstant gehalten wird. So wird das in dem Isolierraum 20 befindliche Isoliergas mittels einer Pumpe 24 über Leitungen 23a, 23b regelmäßig ausgetauscht und ersetzt durch Isoliergas einer vorbestimmten Temperatur. Leitung 23b kann dem Druckausgleich dienen. Die Temperatur des Isoliergases kann insbesondere einstellbar sein, sodass eine dynamische Wärmedämmung erreicht werden kann. Trotz einer geringen Wärmeleitfähigkeit tritt das Isoliergas tritt unweigerlich zumindest in geringem Maße in Wärmeaustausch mit dem Wärmeträgerrohr 17, gibt insbesondere Wärme an das Wärmeträgerrohr 17 ab. Hierdurch kann es zu einem Abkühlen des Isoliergases, damit des Isolierraums 20 und folglich der Schichten 110, 120, 130 kommen, was zu einem unerwünschten Unterschreiten des Gefrierpunktes im umgebenden Sediment führen kann. Die erfindungsgemäße aktive Wärmedämmung sorgt durch den Gasaustausch für den ständigen Nachschub an temperiertem Isoliergas und damit dafür, dass ein solches Unterschreiten des Gefrierpunktes nicht erfolgt. So kann beispielsweise durch Einleiten erwärmten Isoliergases ein Vereisen der den ersten Abschnitt 12 umgebenden Schichten besonders gut verhindert werden. Sinnvollerweise könnte die Temperatur derart geregelt werden, dass in dem Rohr eine Temperatur möglichst um +1 bis +2°C gehalten wird, um einerseits ein Gefrieren des umgebenden Gesteins sich zu verhindern, andererseits aber keinen zu großen thermischen Gradienten zum Kältemittel aufzubauen. Ein großer thermischer Gradient zwischen Rohrinnenraum und Kältemittel würde dazu führen, dass das Kältemittel unnötig aufgewärmt wird und den Gefrierprozess beim Vereisen minimiert.

Alternativ oder zusätzlich zu der aktiven Wärmedämmung 16 unter Verwendung eines isolierten Gases ist es auch möglich, die Temperaturregelung innerhalb der Erdwärmesonde mithilfe von elektrischen Heizmitteln, wie beispielsweise Heizwiderständen und Temperatursensoren vorzunehmen. Beispielsweise kann eine Temperaturregelung vorgesehen sein, bei der elektrische Heizwiderstände über Temperatursensoren an der Außenseite der Erdwärmesonde gezielt angesteuert werden. Es ist aber auch eine Temperatursteuerung ohne Verwendung von Temperatursensoren möglich. Die elektrischen Heizelemente werden dabei so betrieben, dass an der Außenwandung der Erdwärmesonde in den Vereisungsfrei zu haltenden wassergefüllten geologischen Schichten keine Temperaturen unterhalb des Gefrierpunkts auftreten.

Wie auch bei der Temperaturregelung unter Verwendung des Isoliergases ist es bei der Verwendung von elektrischen Heizelementen wesentlich, dass durch eine Temperatursteuerung/-regelung innerhalb der Erdwärmesonde gezielt bestimmte geologische Schichten vereist, zum Zwecke der Latentwärmespeicherung werden können, während andere Schichten kontrolliert eisfrei gehalten werden, um damit verbundene negative Auswirkungen auf die Umwelt zu vermeiden.

Aufgrund dieser erfindungsgemäßen aktiven Wärmedämmung kann auch bei sehr niedrigen Temperaturen eines durch das Wärmeträgerrohr 17 der Erdwärmesonde 10 geförderten Wärmeträgerfluids die Vereisung des Geringwasserleiters 130 verhindert werden. Somit können eventuell in dem Geringwasserleiter 130 bzw. in den darüberliegenden Schichten verlaufende Leitungen von Beschädigungen freigehalten werden. Die aktive Wärmedämmung im oberflächennahen Bereich erlaubt damit den gewünschten Einsatz im städtischen Gebiet.

Von oberhalb, beispielsweise durch Niederschlag, in den Isolierraum 20 eintretendes Wasser kann durch ebenfalls durch die Pumpe 24 aus dem Isolierraum herausbefördert werden. Somit kann auch solches Wasser nicht zu einer Beschädigung der Erdwärmesonde und auch nicht zur Beeinträchtigung der Wärmedämmung führen.

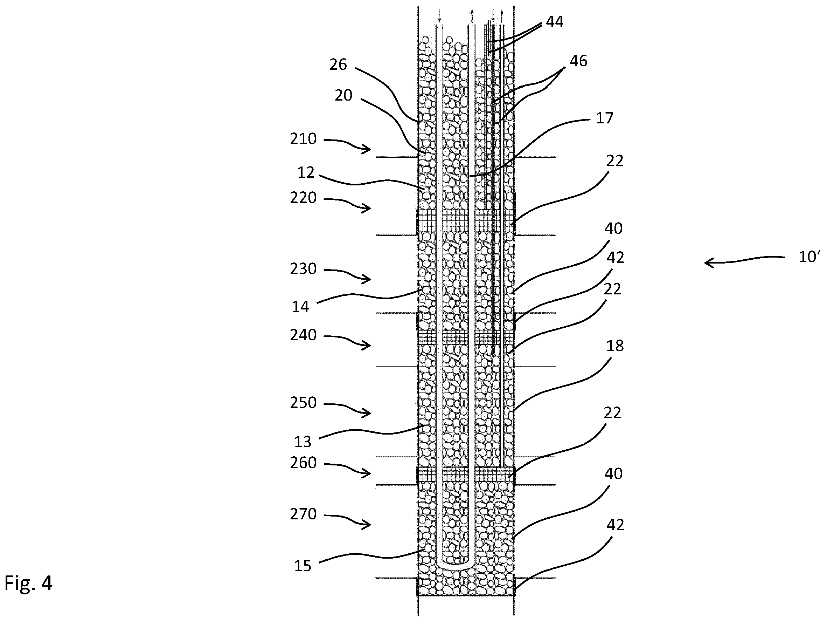

Neben dem ersten Abschnitt und dem zweiten Abschnitt kann die Erdwärmesonde weitere Abschnitte mit aktiver Wärmedämmung bzw. zur Ausbildung eines Eisspeichers in weiteren, tieferliegenden wasserführenden Schichten aufweisen. Insbesondere kann die Erdwärmesonde alternierend mehrere Abschnitte mit aktiver Wärmedämmung und Abschnitte zur Ausbildung eines Eisspeichers aufweisen. Dies ist in den Figuren 4 bis 5 dargestellt.

So zeigt Figur 4 eine Erdwärmesonde 10', die sich durch mehrere Schichten 210-270 in den Untergrund hinein erstreckt. In Figur 4 sind vier Abschnitte der Erdwärmesonde 10' dargestellt, nämlich zwei Abschnitte 12, 13 mit einer aktiven Wärmedämmung und zwei Abschnitte 14, 15 ohne eine solche aktive Wärmedämmung zur Ausbildung eines Eisspeichers in den die jeweiligen Abschnitte 14, 15 umgebenden wasserführenden Schichten 230, 270. In dem vorliegenden Ausführungsbeispiel kann der Abschnitt 12 als der oberflächennahe erste Abschnitt verstanden werden und der anschließende Abschnitt 14 als der zweite Abschnitt. Die aktive Wärmedämmung der Abschnitte 12, 13 der Erdwärmesonde 10' wird auf die gleiche Weise erreicht wie in der vorherigen Ausgestaltung. So wird ein in den entsprechenden Isolierräumen der Abschnitte 12, 13 aufgenommenes Isoliergas über Rohrleitungen 44, 46 ausgetauscht. Die Abschnitte 14, 15 weisen eine solche aktive Wärmedämmung nicht auf, sondern ermöglichen einen Wärmeaustausch von in dem Wärmeträgerrohr 17 zirkulierenden Wärmefluid mit den umgebenden Untergrundbereichen 230, 270. In den Untergrundbereichen 230, 270 kann somit ein Eisspeicher erzeugt werden. Die Abschnitte 14, 15 weisen Stahlfilter 40 als Abgrenzung gegenüber dem umgebenden Untergrund auf. Mit Bezugszeichen 42 ist eine verstärkte Verrohrung in den Übergangsbereichen zwischen zwei benachbarten Abschnitten bezeichnet. Dies trägt zur Stabilisierung der Erdwärmesonde bei, was insbesondere beim Gefrieren des umgebenden Bodens hilfreich ist. Die verstärkte Verrohrung 42 ist dabei insbesondere im Bereich von benachbarten Abschnitten voneinander trennenden Packersystemen 22 vorgesehen.

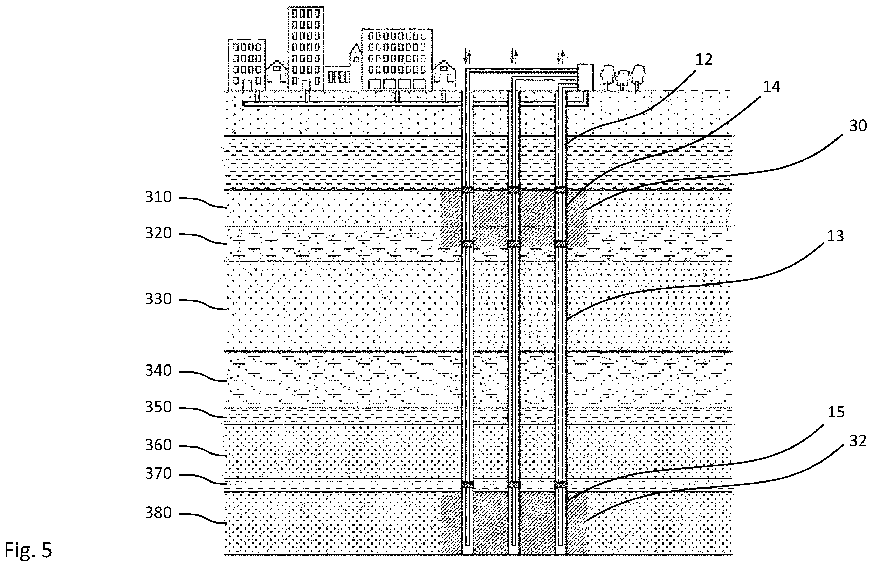

In Figur 5 ist ein Eisspeichersystem mit mehreren Erdwärmesonden ähnlich derer in Figur 4 gezeigt. Hier umfasst das geologische Profil Grundwasserleiter 310, 330, 360, 380 mit guter hydraulischer Leitfähigkeit, i.d.R. Sande und Kiese, Grundwassergeringleiter 320, 340 mit geringer hydraulischer Leitfähigkeit, i.d.R. schluffige Feinsande, Schluffe, z.B. Geschiebemergel, und Grundwassernichtleiter 350, 370 mit sehr geringer hydraulischer Leitfähigkeit, i.d.R. Tone. Wie aus Figur 5 deutlich wird, können mit derartigen Erdwärmesonden in mehreren, auch nicht benachbarten und in unterschiedlichen Tiefen liegenden Untergrundbereichen Eisspeicher 30, 32 angelegt werden, nämlich beispielsweise in den Grundwasserleitern 310, 380 und in dem Geringwasserleiter 320.

### Bezugszeichen:

- 10, 10': Erdwärmesonden
- 10a: Anstromerdwärmesonden
- 11a: Zulaufrohrabschnitt
- 11b: Ablaufrohrabschnitt
- 12, 13: Abschnitte mit aktiver Wärmedämmung
- 14, 15: Abschnitte ohne aktive Wärmedämmung
- 16: aktive Wärmedämmung
- 17: Wärmeträgerrohr
- 18: Wandung
- 20: Isolierraum
- 22: Packersystem
- 23a, 23b: Leitungen
- 24: Pumpe
- 26: Füllstoff
- 40: Stahlfilter
- 42: verstärkte Verrohrung
- 44, 46: Rohrleitungen
- 100: geologischer Untergrund
- 102: Geländeoberkante
- 104: Grundwasserspiegel
- 110: Untergrundbereich, wasserteilgesättigte Zone
- 120: Grundwasserleiter
- 130: Grundwassergeringleiter
- 140: Grundwasserleiter
- 150: Grundwassergeringleiter
- 210- 270: Schichten
- 310, 330, 360, 380: Grundwasserleiter
- 320, 340: Grundwassergeringleiter
- 350, 370: Grundwassernichtleiter
- Z: Zulauf
- A: Ablauf
- G: Grundwasserströmung
- C-C: Schnittlinie

## Patentansprüche

1. Erdwärmesonde zum Einbringen in einen geologischen Untergrund (100), umfassend einen in einem Verwendungszustand der Erdwärmesonde (10) oberflächennahen ersten Abschnitt (12) und einen unterhalb an den ersten Abschnitt (12) anschließenden, in dem Verwendungszustand der Erdwärmesonde (10) in eine wasserführende Schicht (140) ragenden zweiten Abschnitt (14) zur Ausbildung eines Eisspeichers in der wasserführenden Schicht (140), wobei der erste Abschnitt (12) eine aktive Wärmedämmung (16) aufweist zur Dämmung gegenüber dem den ersten Abschnitt (12) umgebenden geologischen Untergrund (110, 120, 130) und die aktive Wärmedämmung eine Temperatur vorgeben kann, sodass ein Wärmeaustausch zwischen dem Wärmeträgerfluid und dem umgebenden geologischen Untergrund überwiegend über den zweiten Abschnitt erfolgt.

2. Eisspeichersystem zur Wärmeversorgung, umfassend mehrere in den geologischen Untergrund (100) eingebrachte Erdwärmesonden (10) gemäß Anspruch 1 zur Ausbildung eines Eisspeichers in einer wasserführenden Schicht (140), insbesondere in einem Grundwasserleiter oder einem Grundwassergeringleiter.

3. Eisspeichersystem nach Anspruch 2, **dadurch gekennzeichnet, dass** zumindest eine der Erdwärmesonden (10) ein oder mehrere weitere, unterhalb des zweiten Abschnitts (14) angeordnete Abschnitte mit aktiver Wärmedämmung und Abschnitte zur Ausbildung eines Eisspeichers in einer wasserführenden Schicht aufweist.

4. Eisspeichersystem nach einem der Ansprüche 2 oder 3, **dadurch gekennzeichnet, dass** sich der erste Abschnitt (12) mindestens bis zu einer Tiefe von 5 m in den geologischen Untergrund (100) erstreckt.

5. Eisspeichersystem nach einem der Ansprüche 2 bis 4, **dadurch gekennzeichnet, dass** die Erdwärmesonden ein Wärmeträgerrohr (17), eine das Wärmeträgerrohr (17) umgebende Wandung (18), insbesondere eine Rohrwandung, und einen zwischen der Wandung (18) und dem Wärmeträgerrohr (17) befindlichen Isolierraum (20) umfasst.

6. Eisspeichersystem nach Anspruch 5, **dadurch gekennzeichnet, dass** ein temperierbares Isoliergas in dem Isolierraum (20) aufgenommen ist.

7. Eisspeichersystem nach Anspruch 6, **gekennzeichnet durch** Austauschmittel, insbesondere eine Gaspumpe, zum Austausch des in dem Isolierraum (20) befindlichen Isoliergases zum Zwecke der Temperierung.

8. Eisspeichersystem nach einem der Ansprüche 5 bis 7, **dadurch gekennzeichnet, dass** in dem Isolierraum (20) ein Füllstoff (26) aufgenommen ist, insbesondere eine granuläre mineralische Isolierschüttung.

9. Eisspeichersystem nach einem der Ansprüche 5 bis 8, **gekennzeichnet durch** eine Wasserpumpe zum Abpumpen von in den Isolierraum (20) eingetretenem Wasser.

10. Eisspeichersystem nach einem der Ansprüche 2 bis 9, **dadurch gekennzeichnet, dass** zwischen dem ersten Abschnitt (12) und dem zweiten Abschnitt (14) eine thermisch stabile hydraulische Abdichtung, insbesondere in Form eines Packersystems (22) oder als Tonsperre, gegenüber aufsteigendem Grundwasser angeordnet ist.

11. Eisspeichersystem nach einem der Ansprüche 2 bis 10, **gekennzeichnet durch** eine Fördereinheit zum Fördern eines Wärmeträgerfluids durch die Erdwärmesonden (10) zum Einbringen von Wärmeenergie in die wasserführende Schicht (140) und/oder zur Entnahme von Wärmeenergie aus der wasserführenden Schicht (140).

12. Eisspeichersystem nach Anspruch 11, **dadurch gekennzeichnet, dass** als Wärmeträgerfluid eine Wärmeträgerflüssigkeit verwendet wird, insbesondere ausgewählt aus der folgenden Menge: Salzsole, flüssiger Stickstoff (N₂), organische Flüssigkeiten.

13. Eisspeichersystem nach einem der Ansprüche 2 bis 12, **dadurch gekennzeichnet, dass** die Erdwärmesonde in dem zweiten Abschnitt elektrische Heizmittel vorsieht, die dazu ausgebildet sind, so betrieben zu werden, dass in einem Verwendungszustand der Erdwärmesonden (10) die angrenzenden wassergefüllten Schichten eisfrei gehalten werden.

14. Verfahren zur Einbringung und Entnahme von Wärmeenergie in einen geologischen Untergrund (100) unter Ausbildung eines Eisspeichers, wobei ein Wärmeträgerfluid in mehreren in den Erdboden (100) eingebrachte Erdwärmesonden (10) zirkuliert, wobei die Erdwärmesonden (10) jeweils einen oberflächennahen ersten Abschnitt (12) und einen unterhalb an den ersten Abschnitt (12) anschließenden, in eine wasserführende Schicht (140) ragenden zweiten Abschnitt (14) aufweisen, **dadurch gekennzeichnet, dass** der erste Abschnitt (12) eine aktive Wärmedämmung (16) aufweist zur Dämmung gegenüber dem den ersten Abschnitt (12) umgebenden geologischen Untergrund (110, 120, 130) und die aktive Wärmedämmung eine Temperatur vorgeben kann, sodass ein Wärmeaustausch zwischen dem Wärmeträgerfluid und dem umgebenden geologischen Untergrund überwiegend über den zweiten Abschnitt (14) mit der wasserführenden Schicht (140) erfolgt.

15. Verfahren nach Anspruch 14, **gekennzeichnet durch** Einbringen eines Wärmeträgerfluids einer ersten Temperatur in Erdwärmesonden, die in einem Anstrombereich des Grundwassers angeordnet sind, und Einbringen eines Wärmeträgerfluids einer höheren, zweiten Temperatur in Erdwärmesonden, die außerhalb des Anstrombereichs angeordnet sind.

## Claims

1. Geothermal probe for being introduced into a geological subsurface (100), comprising a first section (12), the first section (12) being near-surface in a state of use of the geothermal probe (10), and a second section (14) for formation of an ice storage in a water-bearing layer, said second section (14) adjoining the first section (12) underneath and projecting into the water-bearing layer (140) in the state of use of the geothermal probe (10), wherein the first section (12) has an active thermal insulation (16) for insulation against the geological subsurface (110, 120, 130) surrounding the first section (12) and the active thermal insulation can set a temperature so that a heat exchange between the heat transfer fluid and the surrounding geological subsurface takes place predominantly via the second section.

2. Ice storage system for heat supply, comprising a plurality of geothermal probes (10) according to claim 1, the probes (10) being inserted into the geological subsurface (100) for formation of an ice storage in a water-bearing layer (140), in particular in an aquifer or an aquitard.

3. Ice storage system according to claim 2, **characterized in that** at least one of the geothermal probes (10) has one or more further sections arranged underneath the second section (14), said further sections having active thermal insulation, and sections for formation of an ice storage in a water-bearing layer.

4. Ice storage system according to one of claims 2 or 3, **characterized in that** the first section (12) extends at least to a depth of 5 m into the geological subsurface (100).

5. Ice storage system according to one of claims 2 to 4, **characterized in that** the geothermal probe comprises a heat transfer pipe (17), a wall (18) surrounding the heat transfer pipe (17), in particular a pipe casing, and an insulating space (20) located between the wall (18) and the heat transfer pipe (17).

6. Ice storage system according to claim 5, **characterized in that** a temperature-controllable insulating gas is accommodated in the insulating space (20).

7. Ice storage system according to claim 6, **characterized by** exchange means, in particular a gas pump, for exchanging the insulating gas located in the insulating space (20) for the purpose of temperature control.

8. Ice storage system according to one of claims 5 to 7, **characterized in that** a filler (26) is accommodated in the insulating space (20), in particular a granular mineral insulating fill.

9. Ice storage system according to one of claims 5 to 8, **characterized by** a water pump for pumping out water that has entered into the insulating space (20).

10. Ice storage system according to one of claims 2 to 9, **characterized in that** a thermally stable hydraulic seal, in particular in the form of a packer system (22) or as a clay barrier, against rising groundwater is arranged between the first section (12) and the second section (14).

11. Ice storage system according to one of claims 2 to 10, **characterized by** a pumping unit for pumping a heat transfer fluid through the geothermal probe (10) for introducing thermal energy into the water-bearing layer (140) and/or for extracting thermal energy from the water-bearing layer (140).

12. Ice storage system according to claim 11, **characterized in that** a heat transfer liquid is used as the heat transfer fluid, in particular selected from the following group: brine, liquid nitrogen (N₂), organic liquids.

13. Ice storage system according to one of claims 2 to 12, **characterized in that** the geothermal probe provides electrical heating elements in the second section, the electrical heating elements being designed to be operated in such a way that, in a state of use of the geothermal probes (10), the adjacent water-filled layers are kept ice-free.

14. Method for introducing and extracting thermal energy into a geological subsurface (100) with formation of an ice storage, wherein a heat transfer fluid circulates in a plurality of geothermal probes (10) inserted into the ground (100), wherein the geothermal probes (10) each have a near-surface first section (12) and a second section (14) adjoining the first section (12) underneath and projecting into a water-bearing layer (140), **characterized in that** the first section (12) has an active thermal insulation (16) for insulation against the geological subsurface (110, 120, 130) surrounding the first section (12) and the active thermal insulation can set a temperature so that a heat exchange between the heat transfer fluid and the surrounding geological subsurface takes place predominantly via the second section (14) with the water-bearing layer (140).

15. Method according to claim 14, **characterized by** introducing a heat transfer fluid of a first temperature into geothermal probes that are arranged in an inflow area of the groundwater, and introducing a heat transfer fluid of a higher, second temperature into geothermal probes that are arranged outside the inflow area.

## Revendications

1. Sonde géothermique destinée à être introduite dans un sous-sol géologique (100), comportant une première section (12) proche de la surface dans un état d'utilisation de la sonde géothermique (10) et une deuxième section (14) en dessous, prolongeant la première section (12), faisant saillie dans une nappe aquifère (140) dans l'état d'utilisation de la sonde géothermique (10), pour la formation d'un accumulateur de glace dans la nappe aquifère (140), dans laquelle la première section (12) présente une isolation thermique active (16) pour l'isolation par rapport au sous-sol géologique (110, 120, 130) entourant la première section (12) et l'isolation thermique active peut définir une température, de manière à produire un échange thermique entre le fluide caloporteur et le sous-sol géologique autour, majoritairement par le biais de la deuxième section.

2. Système de stockage de glace pour la fourniture de chaleur, comportant plusieurs sondes géothermiques (10) selon la revendication 1 introduites dans le sous-sol géologique (100) pour la formation d'un accumulateur de glace dans une nappe aquifère (140), en particulier dans un aquifère ou un aquitard.

3. Système de stockage de glace selon la revendication 2, **caractérisé en ce qu'**au moins l'une des sondes géothermiques (10) présente une ou plusieurs autres section disposées sous la deuxième section (14) avec une isolation thermique active et des sections pour la formation d'un accumulateur de glace dans une nappe aquifère.

4. Système de stockage de glace selon l'une des revendications 2 ou 3, **caractérisé en ce que** la première section (12) s'étend au moins jusqu'à une profondeur de 5 m dans le sous-sol géologique (100).

5. Système de stockage de glace selon l'une des revendications 2 à 4, **caractérisé en ce que** les sondes géothermiques comportent un tuyau caloporteur (17), une paroi (18) entourant le tuyau caloporteur (17), en particulier une paroi de tuyau, et un espace isolant (20) situé entre la paroi (18) et le tuyau caloporteur (17).

6. Système de stockage de glace selon la revendication 5, **caractérisé en ce qu'**un gaz isolant thermorégulable est reçu dans l'espace isolant (20).

7. Système de stockage de glace selon la revendication 6, **caractérisé par** des moyens d'échange, en particulier une pompe à gaz destinée à l'échange du gaz isolant situé dans l'espace isolant (20) aux fins de la thermorégulation.

8. Système de stockage de glace selon l'une des revendications 5 à 7, **caractérisé en ce qu'**une matière de remplissage (26) est reçue dans l'espace isolant (20), en particulier un remblai isolant minéral granulaire.

9. Système de stockage de glace selon l'une des revendications 5 à 8, **caractérisé par** une pompe à eau destinée à pomper de l'eau parvenue dans l'espace isolant (20).

10. Système de stockage de glace selon l'une des revendications 2 à 9, **caractérisé en ce qu'**un moyen d'étanchéité hydraulique thermiquement stable, en particulier sous la forme d'un système d'obturateur (22) ou d'une barrière en argile par rapport aux eaux souterraines montantes, est disposé entre la première section (12) et la deuxième section (14).

11. Système de stockage de glace selon l'une des revendications 2 à 10, **caractérisé par** une unité de transport destinée à transporter un fluide caloporteur à travers les sondes géothermiques (10) pour l'introduction d'énergie thermique dans la nappe aquifère (140) et/ou pour le prélèvement d'énergie thermique à partir de la nappe aquifère (140).

12. Système de stockage de glace selon la revendication 11, **caractérisé en ce qu'**un liquide caloporteur, en particulier sélectionné parmi le groupe comprenant de la saumure, de l'azote liquide (N₂), des liquides organiques, est utilisé comme fluide caloporteur.

13. Système de stockage de glace selon l'une des revendications 2 à 12, **caractérisé en ce que** la sonde géothermique dans la deuxième section fournit des moyens de chauffage électriques, lesquels sont conçus pour être actionnés de manière à maintenir exemptes de glace les couches remplies d'eau adjacentes dans un état d'utilisation des sondes géothermiques (10).

14. Procédé d'introduction et de prélèvement d'énergie thermique dans un sous-sol géologique (100) en formant un accumulateur de glace, dans lequel un fluide caloporteur circule dans plusieurs des sondes géothermiques (10) introduites dans le sol (100), dans lequel les sondes géothermiques (10) présentent respectivement une première section (12) proche de la surface et une deuxième section (14) en dessous, prolongeant la première section (12), faisant saillie dans une nappe aquifère (140), **caractérisé en ce que** la première section (12) présente une isolation thermique active (16) pour l'isolation par rapport au sous-sol géologique (110, 120, 130) entourant la première section (12) et l'isolation thermique active peut définir une température, de manière à produire un échange thermique entre le fluide caloporteur et le sous-sol géologique autour, majoritairement par le biais de la deuxième section (14) avec la nappe aquifère (140).

15. Procédé selon la revendication 14, **caractérisé par** l'introduction d'un fluide caloporteur à une première température dans des sondes géothermiques, lesquelles sont disposées dans une région d'entrée des eaux souterraines, et par l'introduction d'une fluide caloporteur à une deuxième température plus élevée dans des sondes géothermiques disposées à l'extérieur de la région d'entrée.
